**Europäisches Patentamt**

**European Patent Office**

**Office européen des brevets**

(19)

(11) Veröffentlichungsnummer : **0 123 988**
**B1**

(12) **EUROPÄISCHE PATENTSCHRIFT**

(45) Veröffentlichungstag der Patentschrift :
**17.08.88**

(21) Anmeldenummer : **84104195.7**

(22) Anmeldetag : **13.04.84**

(51) Int. Cl.⁴ : **E 04 B   1/60, F 16 B   5/02**

(54) Verfahren zum punktförmigen Befestigen von Hohlkammerplatten.

(30) Priorität : **29.04.83 DE 3315629**

(43) Veröffentlichungstag der Anmeldung :
**07.11.84 Patentblatt 84/45**

(45) Bekanntmachung des Hinweises auf die Patenterteilung : **17.08.88 Patentblatt 88/33**

(84) Benannte Vertragsstaaten :
**AT BE CH DE FR GB IT LI NL SE**

(56) Entgegenhaltungen :
**EP-A- 0 059 965**
**CH-A-   416 048**
**FR-A- 1 566 657**
**GB-A-   654 181**
**US-A- 2 666 252**
**"Problemlösungslexikon Stegdoppel- und Stegdrei-fachplatten", Firmenschrift der Firma Röhm GmbH, Darmstatt, 1982**

(73) Patentinhaber : **Röhm GmbH**
**Kirschenallee Postfach 4242**
**D-6100 Darmstadt 1 (DE)**

(72) Erfinder : **Krajec, Otmar**
**An der Fuchsenhütte 38**
**D-6101 Rossdorf 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Gebiet der Erfindung

Die Erfindung betrifft ein Verfahren zum Befestigen von Hohlkammerplatten aus schlagzähem Kunststoff auf einer Unterkonstruktion mittels Schrauben, die durch die Hohlkammerplatte geführt werden.

### Stand der Technik

Hohlkammerplatten aus Kunststoff werden, beispielsweise mittels Profilleisten, die den Rand umfassen, auf der Unterkonstruktion befestigt (vgl. « Problemlösungslexikon Stegdoppel- und Stegdreifachplatten », Firmenschrift der Röhm GmbH, Darmstadt, 1982). Zusätzlich werden häufig punktförmige Befestigungen innerhalb der Fläche der Hohlkammerplatte angebracht. In diesem Falle wird die Platte durchbohrt (loc. cit. S. 34, 3. Bohren), eine Schraube durch die Bohrung geführt und die Platte durch Festziehen der Schraubverbindung an der Unterkonstruktion befestigt (loc. cit. S. 13, Abb. 27a) Gelegentlich wird allein diese Befestigungsart gewählt. Bei der Befestigung großer Flächen liegt in den erforderlichen Arbeitsgängen des Bohrens und Verschraubens ein erheblicher Arbeitsaufwand.

Punktförmige Befestigungen innerhalb der Fläche einer Hohlkammerplatte sind gemäß EP-A-59965 möglich, wenn die Hohlkammerplatte eine Mehrzahl von hinterschnittenen Nuten enthält, was jedoch bei den üblichen Hohlkammerplatten nicht der Fall ist.

### Aufgabe und Lösung

Die Erfindung verfolgt das Ziel, das Verfahren zum punktförmigen Befestigen von Hohlkammerplatten aus schlagzähem Kunststoff auf einer Unterkonstruktion mittels einer Schraubverbindung zu vereinfachen. Es wurde gefunden, daß man auf das Vorbohren an den Befestigungspunkten ohne Nachteil verzichten und die Schraube einfach durch die Hohlkammerplatte hindurchstoßen kann. Dabei brechen die beiderseitigen Außenwände der Hohlkammerplatte, jedoch wurde bei schlagzähen Kunststoffen keine Fortpflanzung der entstehenden Risse beobachtet. Der Arbeitsaufwand zur Befestigung einer großen, an vielen Punkten befestigten Fläche vermindert sich dadurch auf weniger als die Hälfte.

### Die Hohlkammerplatte

besteht aus einem Kunststoff mit einer Kerbschlagzähigkeit nicht unter 5, vorzugsweise 15 bis 30 mm N/mm² (ermittelt durch den Schlagbiegeversuch am Normkleinstab, nach DIN 43453). Geeignet sind z. B. Polykarbonatkunststoffe, schlagzäh modifiziertes Polymethylmethacrylat oder Polystyrol, Polypropylen oder Copolymerisate aus Methylmethacrylat und Acrylestern. Die Hohlkammerplatte ist einstückig extrudiert und enthält zwei parallele ebene Außenflächen, gegebenenfalls eine parallel dazwischen angeordnete Mittelebene und Stege, welche die Außenwände einstückig verbinden und gegebenenfalls die Mittelebene kreuzen. Die Gesamtdicke der Hohlkammerplatte beträgt in der Regel höchstens 12 mm, vorzugsweise 4 bis 8 mm. Die Außenwände sind z. B. 0,3 bis 1 mm dick. Die Stege und gegebenenfalls die Mittelebene können dünner als die Außenwände sein. Punktförmige Befestigungen sind vor allem dann wichtig, wenn die Platte mehr als 1 000 mm breit oder weniger als 6 mm dick ist.

### Als Unterkonstruktion

eignet sich jedes Stützgerüst, das die Platte oder Platten in der gewünschten Lage hält und zur Aufnahme der auftretenden Verkehrslasten geeignet ist. Verwendbar sind Gerüste aus Metallpfetten, Holz- oder Kunststoffstäben, GFK-Teilen und dergl. Die Befestigungspunkte werden vorzugsweise in Abständen von 20 bis 50 cm an der Unterkonstruktion angebracht.

Besonders vorteilhaft ist eine Unterkonstruktion aus Metallpfetten mit einer eingezogenen Schraubnut 4, in die ohne Vorbohren Schrauben eingezogen werden können.

### Die Schraubverbindung

Es ist hilfreich, aber nicht unerläßlich, daß das Ende der Schraube, das die Hohlkammerplatte durchstößt, zugespitzt ist. Die Schrauben sind vorzugsweise nicht dicker als die lichte Breite einer Hohlkammer, z. B. 3 bis 6 mm.

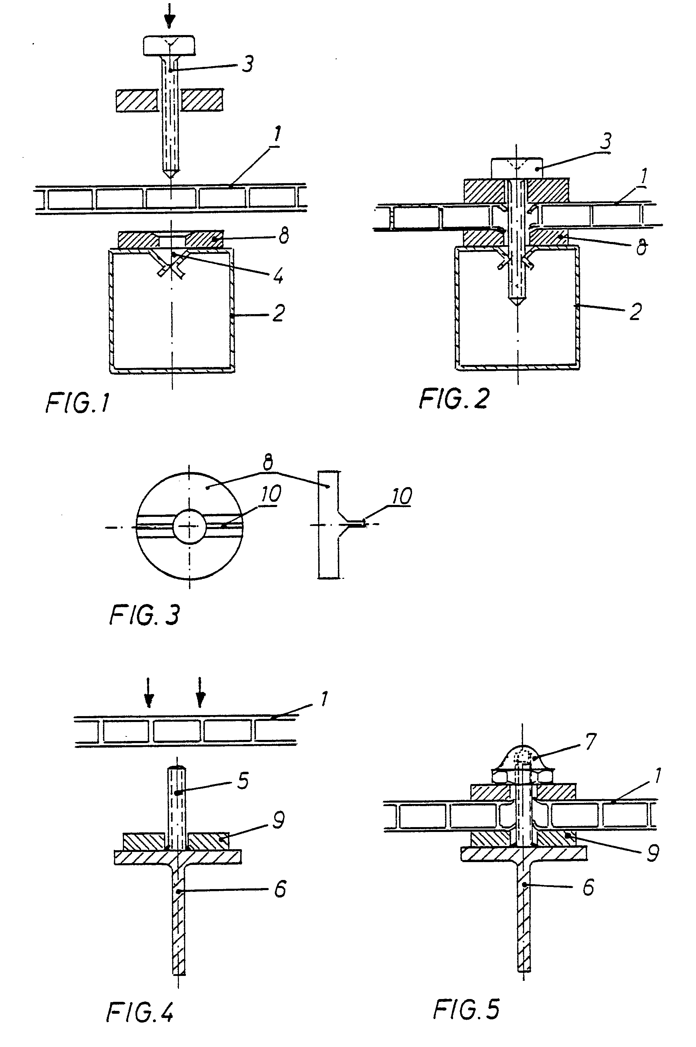

Es kommen zwei Arten von Schraubverbindungen in Betracht, die in den Figuren 1 bis 5 vor und nach dem Verschraubungsvorgang dargestellt sind.

Nach Figur 1 und 2 wird die Platte 1 auf die Pfette 2 aufgelegt, eine Schraube 3 durch die Platte gestoßen und in der Schraubnut 4 der Pfette verschraubt.

Bei der Ausführungsform gemäß den Figuren 4 und 5 ist der Schraubenbolzen 5 fest mit der Pfette 6 verbunden, z. B. angeschweißt, eingeschraubt oder aufgeklipst. Die Platte 1 wird auf die Spitze des Schraubenbolzens aufgelegt und, beispielsweise mit einem Hammerschlag, auf die Pfette durchgeschlagen, wobei der Schraubenbolzen die Platte durchdringt. Nun kann eine Mutter 7 aufgeschraubt werden.

Im allgemeinen wird es bevorzugt, wenn die Hohlkammerplatte die Pfette nicht berührt. Zu diesem Zweck können Abstandhalter 8, 9 zwischen die Pfette und die Platte eingefügt werden. Zweckmäßig führt wenigstens eine Schraube durch jeden Abstandhalter. Zur Erleichterung der Montage enthält der Abstandhalter vorzugsweise Mittel zur vorläufigen Befestigung an der Unterkonstruktion, beispielsweise einen Haftkleber, Klemmbacken oder Zungen 10 zur Verankerung in der Schraubnut 4.

## Patentansprüche

1. Verfahren zum punktförmigen Befestigen von Hohlkammerplatten (1) aus schlagzähem Kunststoff auf einer Unterkonstruktion (2, 6) mittels Schrauben (3, 5), die durch die Hohlkammerplatte (1) geführt werden und die Befestigung der Hohlkammerplatte (1) auf der Unterkonstruktion (2, 6), in an sich bekannter Weise bewirken, dadurch gekennzeichnet, daß das mit Windungen versehene Ende der Schraube (3) bzw. des Schraubenbolzens (5) unter Bildung eines Durchbruches durch die Hohlkammerplatte (1) gestoßen und anschließend durch Festziehen der Schraubverbindung die Hohlkammerplatte (1) auf der Unterkonstruktion (2, 6) befestigt wird.

2. Verfahren nach Anspruch 1, dadurch gekennzeichnet, daß eine Hohlkammerplatte von höchstens 12, vorzugsweise 4 bis 8 mm Dicke verwendet wird.

3. Verfahren nach den Ansprüchen 1 oder 2, dadurch gekennzeichnet, daß eine Hohlkammerplatte aus Polycarbonatkunststoff verwendet wird.

4. Verfahren nach den Ansprüchen 1 bis 3, dadurch gekennzeichnet, daß die Schraube auf der Unterkonstruktion befestigt, die Hohlkammerplatte daraufgelegt, der Schraubenschaft durch Druck auf die Hohlkammerplatte durch diese hindurchgestoßen wird und daß eine Mutter zur Befestigung der Hohlkammerplatte aufgeschraubt wird.

5. Verfahren nach den Ansprüchen 1 bis 3, dadurch gekennzeichnet, daß die Hohlkammerplatte auf die Unterkonstruktion aufgelegt, das Ende der Schraube durch die Hohlkammerplatte durchgestoßen und mit der Unterkonstruktion verschraubt wird.

6. Verfahren nach den Ansprüchen 1 bis 5, dadurch gekennzeichnet, daß zwischen der Unterkonstruktion und der Hohlkammerplatte wenigstens ein Abstandhalter (8, 9) eingefügt wird, welcher eine unmittelbare Berührung zwischen der befestigten Hohlkammerplatte und der Unterkonstruktion verhindert.

7. Verfahren nach Anspruch 6, dadurch gekennzeichnet, daß wenigstens eine Schraube durch jeden Abstandhalter geführt wird.

8. Verfahren nach den Ansprüchen 6 oder 7, dadurch gekennzeichnet, daß der Abstandhalter (8) vor dem Anbringen der Hohlkammerplatte auf der Unterkonstruktion an einem der genannten Teile vorläufig befestigt wird.

9. Verfahren nach Anspruch 8, dadurch gekennzeichnet, daß der Abstandhalter mittels Zungen (10) in einer Schraubnut (4) der Unterkonstruktion vorläufig befestigt wird.

## Claims

1. Process for fixing hollow chamber sheets (1) of high impact strength plastics to a sub-structure (2, 6) at points, by means of screws (3, 5) which pass through the hollow chamber sheet (1) and secure the hollow chamber sheet (1) to the sub-structure (2, 6) in a manner known per se, characterised in that the threaded end of the screw (3) or screw bolt (5) is punched through the hollow chamber sheet (1) to form an opening and the hollow chamber sheet (1) is then secured to the sub-structure (2, 6) by tightening the screw connection.

2. Process as claimed in claim 1, characterised in that a hollow chamber sheet at least 12 and preferably 4 to 8 mm thick is used.

3. Process as claimed in claim 1 or 2, characterised in that a hollow chamber sheet of polycarbonate plastics is used.

4. Process as claimed in claims 1 to 3, characterised in that the screw is fixed to the substructure, the hollow chamber sheet is placed thereon ; the shank of the screw is pushed through the hollow chamber sheet by applying pressure to said sheet and a nut is screwed on to secure the hollow chamber sheet.

5. Process as claimed in claims 1 to 3, characterised in that the hollow chamber sheet is placed on the sub-structure, the end of the screw is forced through the hollow chamber sheet and screwed to the sub-structure.

6. Process as claimed in claims 1 to 5, characterised in that, between the sub-structure and the hollow chamber sheet, there is provided at least one spacer (8, 9) which prevents the secured hollow chamber sheet and the sub-structure from making direct contact with each other.

7. Process as claimed in claim 6, characterised in that at least one screw is passed through each spacer.

8. Process as claimed in claim 6 or 7, characterised in that, before the hollow chamber sheet is placed on the sub-structure, the spacer (8) is temporarily fixed to one of said parts.

9. Process as claimed in claim 8, characterised in that the spacer is temporarily secured by means of tongues (10) in a threaded groove (4) in the sub-structure.

## Revendications

1. Procédé pour la fixation ponctuelle de plaques alvéolées (1) en matière plastique résiliente sur une construction sous-jacente (2, 6), au moyen de vis (3, 5) qui passent à travers la plaque alvéolée (1) et qui assurent la fixation de la plaque alvéolée (1) sur la construction sous-jacente (2, 6) de façon connue en soi, caractérisé en ce que l'extrémité de la vis (3) ou du boulon (5), munie de filets, est enfoncée à travers la plaque alvéolée (1) qu'elle perce au passage, puis la plaque alvéolée (1) est fixée sur la construction sous-jacente (2, 6) par serrage à bloc de l'assemblage par vis.

2. Procédé selon la revendication 1, caractérisé en ce qu'on utilise une plaque alvéolée mesurant au maximum 12 mm et, de préférence, 4 à 8 mm d'épaisseur.

3. Procédé selon la revendication 1 ou 2, caractérisé en ce qu'on utilise une plaque alvéolée en matière synthétique de polycarbonate.

4. Procédé selon l'une quelconque des revendications 1 à 3, caractérisé en ce que la vis est fixée à la construction sous-jacente, la plaque alvéolée est appliquée par-dessus, la tige de vis est enfoncée à travers la plaque alvéolée par une pression exercée sur celle-ci, et en ce qu'un écrou est vissé pour la fixation de la plaque alvéolée.

5. Procédé selon l'une quelconque des revendications 1 à 3, caractérisé en ce que la plaque alvéolée est appliquée sur la construction sous-jacente, l'extrémité de la vis est enfoncée à travers la plaque alvéolée et est vissée à la construction sous-jacente.

6. Procédé selon l'une quelconque des revendications 1 à 5, caractérisé en ce qu'il est interposé, entre la construction sous-jacente et la plaque alvéolée, au moins un écarteur (8, 9) qui empêche un contact direct entre la plaque alvéolée fixée et la construction sous-jacente.

7. Procédé selon la revendication 6, caractérisé en ce qu'on fait passer au moins une vis à travers chaque écarteur.

8. Procédé selon la revendication 6 ou 7, caractérisé en ce qu'avant l'application de la plaque alvéolée sur la construction sous-jacente, l'écarteur (8, 9) est fixé provisoirement à l'un de ces éléments.

9. Procédé selon la revendication 8, caractérisé en ce que l'écarteur est fixé provisoirement au moyen de languettes (10) dans une rainure à vis (4) de la construction sous-jacente.

FIG.1

FIG.2

FIG.3

FIG.4

FIG.5